# EUROPÄISCHE PATENTANMELDUNG

(11) **EP 2 591 856 A1**
(43) Veröffentlichungstag der Anmeldung: **15.05.2013**
(21) Anmeldenummer: 13154517.0
(22) Anmeldetag: 08.10.2008
(51) Int. Cl.: B01J 31/02, B01J 31/12

(54) **Anlage mit Katalysator zur Dismutierung von Wasserstoff enthaltenden Halogensilanen**

(30) Priorität: 06.12.2007 DE 102007059170
(62) Teilanmeldung aus: 08856913.2
(71) Anmelder: Evonik Degussa GmbH, 45128 Essen (DE)
(72) Erfinder: Rauleder, Hartwig, 79618 Rheinfelden (DE); Müh, Ekkehard, 79618 Rheinfelden (DE); Schork, Reinhold, 64689 Grasellenbach (DE)

(57) **Zusammenfassung**

Die Erfindung betrifft eine Anlage mit Katalysator und deren Verwendung zur Dismutierung von Wasserstoff enthaltenden Halogensilanen, insbesondere von Wasserstoff enthaltenden Chlorsilanen.

## Beschreibung

Die Erfindung betrifft eine Anlage mit Katalysator und deren Verwendung zur Dismutierung von Wasserstoff enthaltenden Halogensilanen, insbesondere von Wasserstoff enthaltenden Chlorsilanen.

Die Dismutierungsreaktion dient beispielsweise der Herstellung von Monosilan (SiH₄), Monochlorsilan (ClSiH₃) und auch von Dichlorsilan (DCS, H₂SiCl₂) aus Trichlorsilan (TCS, HSiCl₃) unter Bildung des Koppelprodukts Siliciumtetrachlorid (STC, SiCl₄).

Die Dismutierungsreaktion zur Herstellung von niedrig chlorierten Silanen, wie Monosilan, Monochlorsilan oder Dichlorsilan aus höher chlorierten Silanen, im Allgemeinen Trichlorsilan, wird zur schnelleren Einstellung des chemischen Gleichgewichtes in Gegenwart von Katalysatoren durchgeführt. Dabei erfolgt ein Austausch von Wasserstoff- und Chloratomen zwischen zwei Silanmolekülen in der Regel nach der allgemeinen Reaktionsgleichung (1) in einer so genannten Dismutierungs- oder Disproportionierungsreaktion. Hierbei kann x die Werte 1 bis 3 annehmen.

2HₓSiCl₄₋ₓ → Hₓ₊₁SiCl₄₋ₓ₋₁ + Hₓ₋₁SiCl₄₋ₓ₊₁ (1)

Üblich ist die Disproportionierung von Trichlorsilan an geeigneten Katalysatoren zu Dichlorsilan unter Abtrennung von Siliciumtetrachlorid. Hierbei handelt es sich um eine Gleichgewichtsreaktion, deren Gleichgewicht sich nur langsam einstellt. Die Mehrzahl der verwendeten Katalysatoren sind sekundäre und tertiäre Amine oder quarternäre Ammoniumsalze (vgl. DE-AS 21 62 537). Dabei werden, um die Einstellung des Gleichgewichts zu beschleunigen und nicht zu lange Verweilzeiten am Katalysatorbett und im Reaktor zu erreichen, hohe Temperaturen und hohe Drücke angewendet. Ein Arbeiten unter Druck erhöht jedoch das Brandrisiko bei einer Leckage, da Dichlorsilan und gegebenenfalls gebildete Anteile von H₃SiCl bzw. SiH₄ in Gegenwart von Sauerstoff selbstentzündlich sind. In Durchflussreaktoren ist der Anteil von nicht umgesetztem Trichlorsilan sehr hoch. Das Trichlorsilan muss mehrfach unter hohem Energieaufwand durchgeleitet und redestilliert werden, bevor schließlich eine vollständige Umsetzung erreicht ist.

Ein weiteres Beispiel für die Reaktion gemäß Gleichung (1) ist die Herstellung von Dichlorsilan aus Trichlorsilan gemäß der EP 0 285 937 A1. Dort wird ein Verfahren zur Herstellung von Dichlorsilan durch Disproportionierung von Trichlorsilan an einem Katalysatorfestbett offenbart, bei dem unter Drücken zwischen 0.8 und 1.2 bar und Reaktortemperaturen zwischen 10 °C und dem Siedepunkt des entstehenden Reaktionsgemisches gasförmiges Dichlorsilan entnommen und gewonnen wird; Anteile von Trichlorsilan werden kondensiert und in den Reaktor zurückgeführt, die flüssige Reaktionsphase wird dem Reaktor teilweise entnommen und in Tetrachlorsilan und in den Reaktor zurückzuführendes Trichlorsilan getrennt.

Durch Kombination mehrerer, aufeinander folgender Reaktionen (2 bis 5), wird die Herstellung von Monosilan durch die Dismutierung in drei Schritten - ausgehend von Trichlorsilan zu Dichlorsilan, zu Monochlorsilan und schließlich zu Monosilan unter Bildung von Siliciumtetrachlorid möglich:

2HSiCl₃ ⇄ H₂SiCl₂ + SiCl₄ (2)

2H₂SiCl₂ ⇄ H₃SiCl + HSiCl₃ (3)

2H₃SiCl ⇄ SiH₄ + H₂SiCl₂ (4)

4HSiCl₃ → SiH₄ + 3SiCl₄ (5)

Die Synthese von Monosilan erfolgt in der Regel aus Trichlorsilan durch Dismutierung, wie dies beispielsweise in den Patentdokumenten DE 25 07 864, DE 33 11 650, DE 100 17 168 beschrieben ist.

Als Katalysatoren für die Dismutierung kommen zudem üblicherweise Ionenaustauscher zum Einsatz, z. B. in Form von Katalysatoren basierend auf mit Divinylbenzol vernetztem Polystyrol-Harz mit tertiären Amin-Gruppen, das durch direkte Aminomethylierung eines Styrol-Divinylbenzol-Copolymerisats hergestellt wird (DE 100 57 521 A1), auf Feststoffen, die an einem Gerüst aus Polystyrol, vernetzt mit Divinylbenzol, Amino- oder Alkylenamino-Gruppen tragen, beispielsweise Dimethylamino-Gruppen (DE 100 61 680 A1, DE 100 17 168 A1), auf Anionen austauschenden Harzen basierende Katalysatoren mit tertiären Aminogruppen oder quarternären Ammoniumgruppen (DE 33 11 650 A1), aminfunktionalisierten anorganischen Trägern (DE 37 11 444) oder gemäß DE 39 25 357 Organopolysiloxan-Katalysatoren, wie N[(CH₂)₃SiO_{3/2}]₃. Diese können direkt in die Kolonne eingebracht werden, entweder als Vollschüttung (DE 25 07 864), in Schichten (DE 100 61 680 A1) oder in einer Gewebestruktur (WO 90/02603). Alternativ kann der Katalysator in einem oder mehreren externen Reaktoren untergebracht werden, wobei Ein- und Auslasse mit verschiedenen Stellen der Destillationskolonne verbunden sind (DE 37 11 444). Eine Anlage zur Herstellung von Silanen der allgemeinen Formel HₙSiCl₄₋ₙ mit n = 1, 2, 3 und/oder 4 durch Dismutierung höher chlorierter Silane in Gegenwart eines Katalysators, offenbart die WO 2006/029930 A1. Die Anlage umfasst eine Destillationskolonne mit Kolonnensumpf, Kolonnenkopf und einen Seitenreaktor mit Katalysatorbett. Der Katalysator im Katalysatorbett kann einer strukturierten Gewebepackung oder Füllkörpern aus Gewebe entsprechen, alternativ kann das Katalysatorbett auch Füllkörper bzw. Einbauten aus katalytisch aktivem Material enthalten.

Aufgrund der Stoffeigenschaften der beteiligten Silane, vgl. Tabelle 1, sowie der oft sehr ungünstigen Lage des chemischen Gleichgewichts bei der Dismutierungsreaktion werden die Reaktion und die destillative Aufarbeitung in der Regel im Verbund betrieben.

**Tabelle 1.1**

| **Stoffdaten von Chlorsilanen und Monosilan** | | | | | |
|---|---|---|---|---|---|
| Stoff | Monosilan | Monochlorsilan | DCS | TCS | STC |
| Kritische Temp. [°C] | -3,5 | 123 | 176 | 206 | 234 |
| Normalsiedepunkt [°C] | -112 | -30 | 8,3 | 31,8 | 57,1 |
| Siedepunkt bei 5 bar [°C] | -78 | 15 | 60 | 87 | 117 |
| Siedepunkt bei 25 bar [°C] | -28 | 85 | 137 | 170 | 207 |

Die bestmögliche Integration von Reaktion und Stofftrennung bietet die Reaktivrektifikation, weil die Dismutierungsreaktion eine vom chemischen Gleichgewicht im Umsatz begrenzte Reaktion ist. Dieser Umstand macht die Abtrennung von Reaktionsprodukten von den nicht umgesetzten Edukten erforderlich, um den Umsatz im Gesamtverfahren schließlich zur Vollständigkeit zu treiben.

Wählt man die Destillation als Trennoperation aus, was sich aufgrund der Lage der Siedepunkte anbietet, vgl. Tabelle 1.1, so wäre der energetisch ideale Apparat eine unendlich hohe Destillationskolonne, bei der auf jedem Trennboden bzw. auf jeder theoretischen Stufe durch einen geeigneten Katalysator bzw. eine beliebig lange Verweilzeit das Erreichen des chemischen Gleichgewichts sicher gestellt ist. Dieser Apparat würde den niedrigstmöglichen Energiebedarf und damit die niedrigstmöglichen Betriebskosten aufweisen [vgl. Figur 6 sowie Sundmacher & Kienle (Hrsg.), "Reactive Destillation", Verlag Wiley-VCH, Weinheim 2003].

Wie eingangs beschreiben offenbart DE 37 11 444 A1 aminfunktionalisierte Katalysatoren auf anorganischen Trägern zur Herstellung von Dichlorsilan (DCS) aus Trichlorsilan mittels Dismutierung. Die aufgeführten Katalysatoren (CH₃CH₂O)₃Si(CH₂)₃N(Octyl)₂ und (CH₃O)₃Si(CH₂)₃N(C₂H₅)₂ weisen keine hohe Aktivität auf, so dass der Katalysator in vergleichsweise hohen Mengen eingesetzt werden muss. Eher zufällig scheint auch die Verbindung (CH₃O)₃Si(CH₂)₂N(C₄H₉)₂ genannt worden zu sein, die jedoch auf Grund des ethylenischen -(CH₂)₂-Strukturelementes, aus dem Ethylen (CH₂CH₂) abgespalten werden kann, synthetisch nur äußert schwer zugänglich und schwierig zu handhaben ist (W. Noll, Chemie und Technologie der Silicone, S. 133 ff., Verlag Chemie Weinheim Bergstr.,1968).

Aufgabe der vorliegenden Erfindung ist es, eine Anlage mit Katalysatorsystem zur Dismutierung von Wasserstoff enthaltenden Halogensilanen bereitzustellen, dass die genannten Nachteile nicht aufweist und ein wirtschaftlicheres Verfahren zur Herstellung von höher hydrierten Wasserstoff enthaltenden Halogensilanen ermöglicht.

Gelöst wird die Aufgabe mit einem erfindungsgemäße Katalysator zur Dismutierung von Wasserstoff und Halogen enthaltenden Siliziumverbindungen, der ein Trägermaterial und mindestens ein lineares, cyclisches, verzweigtes und/oder vernetztes aminoalkylfunktionelles Siloxan und/oder Silanol umfasst, wobei mindestens ein Siloxan oder Silanol in idealisierter Form der allgemeinen Formel II entspricht,

(R²)[-O-(R⁴)Si(A)]ₐR³ · (HW)_{w} (II)

wobei A einem Aminoalkyl-Rest -(CH₂)₃-N(R¹)₂, R¹ gleich oder unterschiedlich ist und einer iso-Butyl-, n-Butyl-, tert.-Butyl- und/oder einer Cyclohexyl-Gruppe, R² unabhängig voneinander Wasserstoff, einer Methyl-, Ethyl-, n-Propyl-, iso-Propyl-Gruppe und/oder Y sowie R³ und R⁴ unabhängig voneinander einer Hydroxy-, Methoxy-, Ethoxy-, n-Propoxy-, iso-Propoxy-, Methyl-, Ethyl, n-Propyl-, iso-Propyl-Gruppe und/oder -OY entsprechen, wobei Y für das Trägermaterial steht, HW eine Säure darstellt, wobei W einem anorganischen oder organischen Säure-Rest entspricht, mit a ≥ 1 für ein Silanol, a ≥ 2 für ein Siloxan und w ≥ 0. Insbesondere weist der erfindungsgemäße Katalysator mindestens ein Siloxan oder Silanol mit einem Aminoalkyl-Rest ausgewählt aus 3-(N,N-Di-n-Butylamino)propyl-, 3-(N,N-Di-tert.-Butylamino)propyl- und/oder 3-(N,N-Di-iso-Butylamino)propyl-Rest auf. Bei Vorliegen cyclischer, verzweigter und/oder vernetzter Siloxane oder Silanole wurden beispielsweise durch Kondensation von mindestens zwei der ursprünglichen Gruppen -OR², R³ und/oder R⁴ Siloxanbindungen (-O-Si-O- ) ausgebildet. Wie aus den Ausführungsbeispielen ersichtlich, erlauben diese Katalysatoren eine erheblich schnellere Einstellung der Gleichgewichtslage bei den Dismutierungsreaktionen.

Dabei ist zu beachten, dass zur Dismutierung von Siliziumverbindungen besondere Anforderungen an den Katalysator gestellt werden, insbesondere, wenn die Siliziumverbindung der allgemeinen Formel (III) HₙSiₘX₍₂ₘ₊₂₋ₙ₎ entspricht, wobei X unabhängig von einander Fluor, Chlor, Brom und/oder Jod und 1 ≤ n < (2m + 2) und 1 ≤ m ≤ 12 entsprechen, bevorzugt ist 1 ≤ m ≤ 6, besonders bevorzugt entspricht die Siliziumverbindung mindestens einer der Verbindungen HSiCl₃, H₂SiCl₂ und/oder H₃SiCl.

Um hochreine oder ultrahochreine Siliziumverbindungen herstellen und gewinnen zu können muss ein Katalysator absolut wasserfrei und/oder frei von Alkoholen sein. Als hochreine Siliziumverbindungen gelten jene, deren Grad an Verunreinigung im ppb-Bereich liegt; unter ultrahochreiner Reinheit werden Verunreinigungen im ppt-Bereich und darunter verstanden. Eine Verunreinigung von Siliciumverbindungen mit anderen Metallverbindungen sollte maximal im ppb-Bereich bis in den ppt-Bereich liegen, vorzugsweise im ppt-Bereich. Die geforderte Reinheit kann mittels GC, IR, NMR, ICP-MS oder durch Widerstandsmessung bzw. GD-MS nach Abscheidung des Siliciums überprüft werden.

Als Trägermaterial (Y) eignet sich grundsätzlich jedes poröse oder mikroporöse Material, vorzugsweise wird Siliciumdioxid (SiO₂) oder auch Zeolithe, eingesetzt, das zusätzlich auch Aluminium, Eisen, Titan, Kalium, Natrium, Calcium und/oder Magnesium enthalten kann. Je nach Zusammensetzung und/oder Herstellprozess kann das Siliciumdioxid sauren, neutralen oder basischen Charakter aufweisen. Das Trägermaterial liegt partikulär vor und kann beispielsweise in Form von Formkörpern, wie Kugeln, Pellets, Ringen, extrudierten Stäbchenförmigen Körpern, Trilopes, Röhren, wabenförmig etc. oder in Form von Körnern, Granulat oder Pulver eingesetzt werden, wobei Kugeln oder Pellets bevorzugt sind. Der geträgerte Katalysator basiert vorzugsweise auf einem mikroporösen Träger mit einem Porenvolumen von 100 bis 1 000 mm³/g sowie einer BET-Oberfläche von 10 bis 500 m²/g, vorzugsweise 50 bis 400 m²/g, besonders bevorzugt 100 bis 200 m²/g. Dabei kann der Fachmann das Porenvolumens sowie die BET-Oberfläche mittels an sich bekannter Methoden bestimmen. Vorzugsweise weist das Trägermaterial eine geometrische Oberfläche von 100 bis 2 000 m²/m³ bzw. ein Schüttvolumen 0,1 bis 2 kg/l, vorzugsweise von 0,2 bis 1 kg/l, besonders bevorzugt 0,4 bis 0,9 kg/l, auf. Geeigneterweise sollte der anwendungsfertige, geträgerte Katalysator absolut frei von Wasser, Lösemitteln und Sauerstoff sein und auch diese Stoffe bei Erhitzen nicht freisetzen.

Vorzugsweise beträgt der Gehalt an eingesetzter Aminoalkylalkoxysilan Verbindung zur Modifizierung bzw. Tränkung des Trägermaterials bei der Herstellung des Katalysators 0,1 bis 40 Gew.-% bezogen auf die Menge an Träger. Bevorzugt sind Gehalte von 1 bis 25 Gew.-%, besonders bevorzugt 10 bis 20 Gew.-%, bezogen auf das Trägermaterial.

Das auf dem Träger abgeschiedene oder mit dem Trägermaterial kondensierte und vorteilhaft damit über Y-O-Si kovalent angebundene aminoalkylfunktionelle Siloxan oder Silanol der allgemeinen Formel (II)

(R²)[-O-(R⁴)Si(A)]ₐR³ · (HW)_{w} (II)

wird bevorzugt als aufgrund der Aminogruppe basisch reagierende Verbindung aus einem Lösemittel abgeschieden, gegebenenfalls kann es mit Trägermaterial zu einem Salz reagieren, in diesem Fall entspricht HW einem saueren Trägermaterial, beispielsweise bei Kieselsäure enthaltenden Trägermaterialien. Alternativ kann das aminoalkylfunktionelle Siloxan oder Silanol auch als Ammonium-Salz aus einem Lösemittel abgeschieden werden, beispielsweise als Hydrohalogenid, wie Hydrochlorid. Gemäß einer weiteren Alternative kann es auch mit einem Carboxylat oder Sulfat als Gegenion abgeschieden werden.

Gegenstand der Erfindung ist ferner ein Verfahren zur Herstellung der erfindungsgemäßen Katalysatoren sowie Katalysatoren, die nach dem Verfahren erhältlich sind, in dem ein Trägermaterial und mindestens ein Alkoxysilan der allgemeinen Formel I,

R²-O-(R⁴)Si(A)-R³ (I)

wobei A einem Aminoalkyl-Rest -(CH₂)₃-N(R¹)₂ entspricht und R¹ gleich oder unterschiedlich ist und einer iso-Butyl-, n-Butyl-, tert.-Butyl- und/oder einer Cyclohexyl-Gruppe, R² Wasserstoff, einer Methyl-, Ethyl-, n-Propyl- oder iso-Propyl-Gruppe sowie R³ und R⁴ unabhängig voneinander einer Hydroxy-, Methoxy-, Ethoxy-, n-Propoxy-, iso-Propoxy-, Methyl-, Ethyl, n-Propyl- und/oder iso-Propyl-Gruppe entsprechen,
- in Gegenwart von Wasser und/oder eines Lösemittels sowie gegebenenfalls unter Zusatz einer Säure hydrolysiert und gegebenenfalls kondensiert werden, und der bereits vorhandene oder bei der Umsetzung entstehende Alkohol entfernt wird. Dabei wird das Alkoxysilan vorteilhaft auf dem Trägermaterial fest angebunden. Als Lösemittel werden wässrige Alkohole zur Hydrolyse bevorzugt, dies sind beispielsweise Methanol, Ethanol, iso-Propanol mit einem Gehalt an Wasser, der insbesondere im Bereich von 0,5 bis 30 Gew.-%, bevorzugt zwischen 0,5 bis 10 Gew.-%, besonders bevorzugt zwischen 1 bis 5 Gew.-%, liegt. Auf die vorhandenen Alkoxysilylgruppen bezogen, werden vorteilhaft 0,5 bis 50 mol Wasser, insbesondere 1 bis 20 mol Wasser, verwendet, d. h. bei der Hydrolyse zugegeben. Generell sind alle Lösungsmittel geeignet, in denen die Verbindung der Formel I und/oder das Verfahrensprodukt löslich sind. Besonders bevorzugt wird in wässriger ethanolischer Lösung hydrolysiert und/oder kondensiert. Die Umsetzung kann bei Temperaturen zwischen 0 und 150 °C, unter Normaldruck oder reduziertem Druck, vorzugsweise bei 1 bis 1 000 mbar, besonders bevorzugt bei 50 bis 800 mbar, insbesondere bei 100 bis 500 mbar, erfolgen, wobei die Umsetzung bevorzugt in der Siedehitze erfolgt.

Erfindungsgemäß wird mindestens ein Alkoxysilan ausgewählt aus der Gruppe 3-(N,N-Di-n-Butylamino)propyltrimethoxysilan, 3-(N,N-Di-n-Butylamino)propyltriethoxysilan, 3-(N,N-Di-tert.-Butylamino)propyltrimethoxysilan, 3-(N,N-Di-tert-Butylamino)-propyltriethoxysilan, 3-(N,N-Di-iso-Butylamino)propyltrimethoxysilan oder 3-(N,N-Di-iso-Butylamino)propyltriethoxysilan in Gegenwart eines Trägermaterial umgesetzt, wobei das Trägermaterial vorzugsweise auf Siliciumdioxid Partikeln basiert. Weitere zweckmäßige Alkoxysilane der allgemeinen Formel (I) können folgende Substituenten aufweisen, wobei R₁ einer iso-Butyl-, n-Butyl- oder tert.-Butyl-Gruppe, R² einer Methyl-, Ethyl-, n-Propyl- oder iso-Propyl-Gruppe sowie R⁴ und R³ einer Methoxy-, Ethoxy-, n-Propoxy- und/oder iso-Propoxy-Gruppe entsprechen.

Wie eingangs dargelegt, muss der anwendungsfertige, erfindungsgemäße Katalysator zu Herstellung hochreiner oder ultrahochreiner Siliziumverbindungen absolut wasserfrei und/oder frei von Alkoholen sein. Dazu wird der beschichtete Katalysatorträger vorteilhaft bis zur Gewichtskonstanz getrocknet. Bezüglich der Anforderungen bzw. vorteilhaften Eigenschaften des Trägermaterials zur Herstellung der Katalysatoren wird auf obige Ausführungen verwiesen.

Zur Anwendung kommt der erfindungsgemäße Katalysator bei der Dismutierung von Wasserstoff und Halogen enthaltenden Siliciumverbindungen, insbesondere von Halogensilanen, wie Trichlorsilan, das zu Dichlorsilan, Monosilan, Monochlorsilan und Tetrachlorsilan reagieren kann.

Gegenstand der Erfindung ist auch ein Verfahren zur Dismutierung von Wasserstoff und Halogen enthaltenden Siliziumverbindungen an dem erfindungsgemäßen, aminoalkylfunktionellen Katalysator, der sich in einem Reaktor befindet, wobei der Katalysator aus ein Trägermaterial und mindestens einem linearen, cyclischen, verzweigten und/oder vernetzten Siloxan und/oder Silanol mit einer Wasserstoff und Halogen enthaltenden Siliziumverbindung in Kontakt gebracht wird, wobei mindestens ein Siloxan oder Silanol in idealisierter Form der allgemeinen Formel II entspricht,

(R²)[-O-(R⁴)Si(A)]ₐR³ · (HW)_{w} (II)

und wobei A einem Aminoalkyl-Rest -(CH₂)₃-N(R¹)₂, R¹ gleich oder unterschiedlich ist und einer iso-Butyl-, n-Butyl-, tert.-Butyl- und/oder einer Cyclohexyl-Gruppe, R² unabhängig voneinander Wasserstoff, einer Methyl-, Ethyl-, n-Propyl-, iso-Propyl-Gruppe oder Y sowie R³ und R⁴ unabhängig voneinander einer Hydroxy-, Methoxy-, Ethoxy-, n-Propoxy-, iso-Propoxy-, Methyl-, Ethyl, n-Propyl-, iso-Propyl-Gruppe und/oder -OY entsprechen, wobei Y für das Trägermaterial steht, HW eine Säure darstellt, wobei W einem anorganischen oder organischen Säure-Rest entspricht, mit a ≥ 1 für das Silanol, a ≥ 2 für das Siloxan und w ≥ 0, und wobei mindestens ein Teil des entstehenden Reaktionsgemisches aufgearbeitet wird. Ein bevorzugter Katalysator weist Siloxane und/oder Silanole mit mindestens einem der folgenden Aminoalkyl-Resten A auf, 3-(N,N-Di-n-Butylamino)propyl-, 3-(N,N-Di-tert-Butylamino)propyl-, und/oder 3-(N,N-Di-iso-Butylamino)propyl-Gruppen, wobei die Siloxane und/oder Silanole in Gegenwart eines Trägermaterials, das bevorzugt auf dem eingangs beschriebenen Siliciumdioxid basiert, hergestellt wurden. Je nach Reaktionsführung und Reaktor kann die günstigste Form an Trägermaterial ausgewählt werden.
Gemäß dem vorliegenden Verfahren wird der Katalysator im einem Reaktor kontinuierlich mit mindestens einer zu dismutierenden Siliziumverbindung der allgemeinen Formel III HₙSiₘX₍₂ₘ₊₂₋ₙ₎ angeströmt, wobei X unabhängig von einander Fluor, Chlor, Brom und/oder Jod entsprechen und 1 ≤ n < (2m + 2) und 1 ≤ m ≤ 12 sind, bevorzugt ist 1 ≤ m ≤ 6, besonders bevorzugt wird Trichlorsilan zu Dichlorsilan, Monochlorsilan und Monosilan umgesetzt, die anschließend abgetrennt werden. Das gleichfalls gebildete Siliciumtetrachlorid wird dem chemischen Gleichgewicht diskontinuierlich oder kontinuierlich entzogen und kann separat aufgereinigt werden. Der Katalysator befindet sich dabei vorzugsweise in einem Katalysatorbett. Die Abtrennung der Halogensilane kann mittels einer, dem Reaktor zugeordneter Kolonne erfolgen, die beispielsweise unmittelbar mit dem Reaktor verbunden sein kann. Bei Verwendung einer Kolonne zur destillativen Abtrennung und Aufreinigung mindestens eines Teils des entstehenden Reaktionsgemisches können höher hydrierte Siliziumverbindungen als Leichtsieder am Kolonnenkopf gewonnen und höher chlorierten Siliziumverbindungen als Schwersieder in einem Auffangbehälter angereichert werden, während mindesten eine nicht umgesetzte Siliziumverbindung als Mittelsieder an der Kolonne gewonnen und erneut dem zugeordneten Reaktor zugeführt werden kann.

Gemäß einer besonders bevorzugten Verfahrensweise ist der Katalysator in einem Katalysatorbett in einem Reaktor je einem Trennboden einer Kolonne, beispielsweise einer Rektifizierkolonne, zugeordnet.

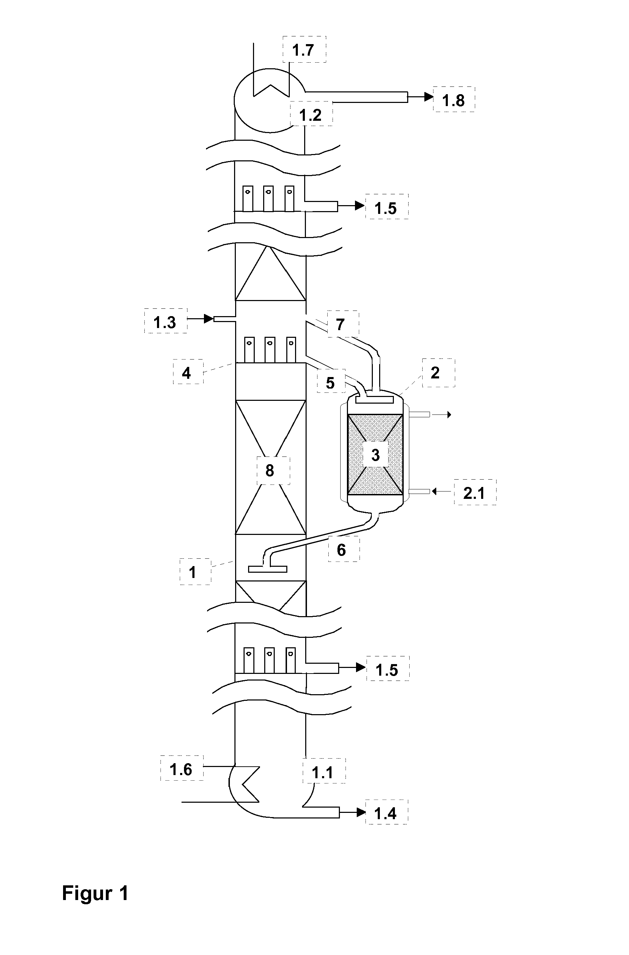

Gleichfalls ist Gegenstand der Erfindung ist eine Anlage zur Dismutierung von Wasserstoff und Halogen enthaltenden Siliziumverbindungen, wie sie beispielsweise in der Figur 1 dargestellt ist. Diese Anlage umfasst einen erfindungsgemäßen Katalysator aus einem Trägermaterial mit Siloxanen und/oder Silanolen basierend auf der Umsetzung eines Aminoalkylalkoxysilans der allgemeinen Formel I, insbesondere auf Siloxanen und/oder Silanolen gemäß der allgemeinen Formel II, wobei die Anlage auf mindestens einer Destillationskolonne (1) mit einer Kolonnenvorlage (1.1) und einem Kolonnenkopf (1.2), mindestens einem Seitenreaktor (2) mit Katalysatorbett (3), mindestens einer Eduktaufgabe (1.3), einer Produktentnahme (1.4) und mindestens einer weiteren Produktentnahme (1.5 bzw. 1.8) basiert, wobei die Destillationskolonne (1) mit mindestens einem Kaminboden (4) ausgestattet ist und mindestens ein Seitenreaktor (2) über mindestens drei Rohrleitungen (5, 6, 7) mit der Destillationskolonne (1) derart verbunden ist, dass der Übergang der Leitung (5) in die Destillationskolonne (1) für den Ablauf des Kondensates vom Kaminboden (4) höher liegt, als die Oberkante des Katalysatorbetts (3), die Leitung (6) für die Abführung der Flüssigphase aus dem Seitenreaktor (2) unterhalb des Kaminbodens (4) in die Destillationskolonne (1) einmündet und diese Einmündung (6) tiefer liegt als die Oberkante des Katalysatorbetts (3) sowie die Leitung (7) für die Abführung der Gasphase aus dem dazugehörigen Seitenreaktor (2) oberhalb der Ebene des Kaminbodens (4) in die Destillationskolonne (1) mündet, wobei die Kolonnenvorlage beheizbar (1.6, 1.1) und die Kolonne kühlbar (1.7) ist (siehe Figur 1).

Das Anfahren bzw. Befüllen der Anlage mit höher chlorierten Silanen als Edukt, insbesondere mit Trichlorsilan, als auch die Eduktzufuhr während des Betriebs der Anlage kann beispielsweise über Zuleitungen bzw. Hähne der Eduktaufgabe (1.3) und/oder über die Kolonnenvorlage (1.1) erfolgen. Eine Entnahme von Produkten kann über den Kolonnenkopf (1.8), die Entnahmestelle (1.5) und/oder die Kolonnenvorlage (1.4) erfolgen. Der Katalysator kann in dem Katalysatorbett (3) in Form von Füllkörpern vorliegen, die beispielsweise als Schüttung oder als verpresste Formkörper vorliegen können.

Die Anlage kann vorteilhaft mit einem beheizbaren Kolonnensumpf (1.6, 1.1) sowie einer Tieftemperaturkühlung (1.7) im Kolonnenkopf (1.2) ausgestattet sein. Zudem kann die Kolonne (1) mit mindestens einer Kolonnenpackung (8) ausgerüstet sein und über mindestens eine zusätzliche Eduktaufgabe (1.3) bzw. Produktentnahme (1.5) verfügen.
Das Katalysatorbett eines Seitenreaktors wird vorzugsweise bei einer Temperatur von -80 bis 120 °C betrieben, wobei die Reaktor- bzw. Katalysatorbetttemperatur vorteilhaft über einen Kühl- bzw. Heizmantel des Reaktors reguliert bzw. gesteuert (2.1) werde kann. In der Regel wird die Anlage in Gegenwart eines Katalysators bei einer Temperatur im Bereich von -120 bis 180 °C und einem Druck von 0,1 bis 30 bar abs. gemäß dem erfindungsgemäßen Verfahren betrieben.

Obwohl für die relativ langsame Dismutierungsreaktion eine ausreichend lange Verweilzeit am Katalysator, d. h. eine ausreichend niedrige Katalysatorbelastung für das näherungsweise Erreichen des chemischen Gleichgewichts zu gewährleisten ist, kann durch den Einsatz des erfindungsgemäßen Katalysators der Reaktor kleiner dimensioniert werden, als herkömmliche Reaktoren für vergleichbare Produktströme. Die verwendbaren Reaktoren (2) sollten entsprechend dimensioniert sein, dass 80 bis 98 % des Gleichgewichtsumsatzes erreichbar sind.

Die gemäß dem erfindungsgemäßen Verfahren hergestellten Siliciumverbindung Dichlorsilan, Monochlorsilan und/oder Monosilan sind hochrein bis hin zu ultrahochrein und eigen sich besonders als Präkursoren zur Herstellung von Siliciumnitrid, Siliciumoxynitrid, Siliciumcarbid, Siliciumoxycarbid oder Siliciumoxid sowie als Präkursoren zur Generierung epitaktischer Schichten.

Die Herstellung des Katalysators als auch seine Wirkungsweise wird anhand der nachfolgenden Beispiele näher erläutert, ohne die Erfindung auf diese Beispiele zu beschränken.

### Beispiele:

### Beispiel 1

600 g wasserhaltiges Ethanol (H₂O-Gehalt etwa 5 %) und 54 g 3-(N,N-Diethylamino)-propyltrimethoxysilan wurden mit 300 g Trägermaterial (SiO₂-Kugeln, Ø 5 mm, BET 150 m²/g, Schüttdichte: 0,55 g/cm³) vorgelegt. Die Reaktionsmischung wurde 5 Stunden unter Rückfluss erhitzt. Nach dem Abkühlen wurde die überstehende Flüssigkeit abgesaugt und die Kugeln wurden mit 600 g wasserfreiem Ethanol gewaschen. Nach einer Stunde wurde die Flüssigkeit wieder abgesaugt. Anschließend wurden die SiO₂-Kugeln eine Stunde bei einem Druck von 300 bis 30 mbar und einer Badtemperatur von 110 bis 120 °C vorgetrocknet und nachfolgend 9,5 Stunden bei < 1 mbar getrocknet.

### Beispiel 2

600 g wasserhaltiges Ethanol (H₂O-Gehalt etwa 5 %) und 54 g 3-(N,N-n-Dibutylamino)-propyltrimethoxysilan wurden mit 300 g Trägermaterial (SiO₂-Kugeln, Ø 5 mm, BET 150 m²/g, Schüttdichte: 0,55 g/cm³) vorgelegt. Die Reaktionsmischung wurde 5 Stunden unter Rückfluss erhitzt. Nach dem Abkühlen wurde die überstehende Flüssigkeit abgesaugt und die Kugeln wurden mit 600 g wasserfreiem Ethanol gewaschen. Nach einer Stunde wurde die Flüssigkeit wieder abgesaugt. Anschließend wurden die SiO₂-Kugeln eine Stunde bei einem Druck von 300 bis 30 mbar und einer Badtemperatur von 110 bis 120 °C vorgetrocknet und nachfolgend 9,5 Stunden bei < 1 mbar getrocknet.

### Beispiel 3

600 g wasserhaltiges Ethanol (H₂O-Gehalt etwa 5 %) und 54 g 3-(N,N-Diisobutylamino)propyltrimethoxysilan wurden mit 300 g Trägermaterial (SiO₂-Kugeln, Ø 5 mm, BET 150 m²/g, Schüttdichte: 0,55 g/cm³) vorgelegt. Die Reaktionsmischung wurde 5 Stunden unter Rückfluss erhitzt. Nach dem Abkühlen wurde die überstehende Flüssigkeit abgesaugt und die Kugeln wurden mit 600 g wasserfreiem Ethanol gewaschen. Nach einer Stunde wurde die Flüssigkeit wieder abgesaugt. Anschließend wurden die SiO₂-Kugeln eine Stunde bei einem Druck von 300 bis 30 mbar und einer Badtemperatur von 110 bis 120 °C vorgetrocknet und nachfolgend 9,5 Stunden bei < 1 mbar getrocknet.

### Beispiel 4

600 g wasserhaltiges Ethanol (H₂O-Gehalt etwa 5 %) und 54 g 3-(N,N-Dicyclohexylamino)propyltrimethoxysilan wurden mit 300 g Trägermaterial (SiO₂-Kugeln, Ø 5 mm, BET 150 m²/g, Schüttdichte: 0,55 g/cm³) vorgelegt. Die Reaktionsmischung wurde 5 Stunden unter Rückfluss erhitzt. Nach dem Abkühlen wurde die überstehende Flüssigkeit abgesaugt und die Kugeln wurden mit 600 g wasserfreiem Ethanol gewaschen. Nach einer Stunde wurde die Flüssigkeit wieder abgesaugt. Anschließend wurden die SiO₂-Kugeln eine Stunde bei einem Druck von 300 bis 30 mbar und einer Badtemperatur von 110 bis 120 °C vorgetrocknet und nachfolgend 9,5 Stunden bei < 1 mbar getrocknet.

### Beispiel 5

600 g wasserhaltiges Ethanol (H₂O-Gehalt etwa 5 %) und 54 g 3-(N,N-Dioctylamino)-propyltrimethoxysilan wurden mit 300 g Trägermaterial (SiO₂-Kugeln, Ø 5 mm, BET 150 m²/g, Schüttdichte: 0,55 g/cm³) vorgelegt. Die Reaktionsmischung wurde 5 Stunden unter Rückfluss erhitzt. Nach dem Abkühlen wurde die überstehende Flüssigkeit abgesaugt und die Kugeln wurden mit 600 g wasserfreiem Ethanol gewaschen. Nach einer Stunde wurde die Flüssigkeit wieder abgesaugt. Anschließend wurden die SiO₂-Kugeln eine Stunde bei einem Druck von 300 bis 30 mbar und einer Badtemperatur von 110 bis 120 °C vorgetrocknet und nachfolgend 9,5 Stunden bei < 1 mbar getrocknet.

### Beispiel 6

300 g unbehandeltes Trägermaterial (SiO₂-Kugeln, Ø 5 mm, BET 150 m²/g, Schüttdichte: 0,55 g/cm³) wurde eine Stunde bei einem Druck von 300 bis 30mbar bei einer Badtemperatur von 110 bis 119 °C getrocknet und anschließend etwa 9,5 Stunden bei < 1 mbar.

### Vergleichsbeispiele - Bestimmung der Katalysatoraktivität

In den nachfolgenden Vergleichsbeispielen wurden jeweils 48 g der mit Aminoalkylsiloxanen und/oder Aminoalkylsilanolen beschichten Siliciumdioxid Kugeln der Beispiele 1 bis 6 in einen 300-ml-Rundkolben mit Tiefkühler, Ablasshahn und Schutzgasüberlagerung unter Schutzgas (Stickstoff) vorgelegt. Anschließend wurden 100 ml Trichlorsilan zugegeben und bei Raumtemperatur (20 bis 25 °C) stehengelassen. Unter Schutzgasatmosphäre erfolgte eine Probenentnahme nach 1, 2 und 4 Stunden, die mittels GC-Analyse untersucht wurde. Die Tabelle 1 gibt die Dichlorsilangehalte in Flächenprozent wieder. Die Einstellung der Gleichgewichtslage der Dismutierungsreaktion gelingt mit den Katalysatoren aus Beispiel 2 und 3 (3-N,N-Di-n-Butylaminopropyl und 3-NN-Di-iso-Butylaminpropyl substituiertes Siloxan und/oder Silanol) besonders schnell. Als Vergleichbeispiele dienen das unbeschichtete Katalysatormaterial aus Beispiels 6 und das Beispiel 1, in dem ein aus dem Stand der Technik bekanntes 3-(N,N-Diethylamino)propyltrimethoxysilan auf eine Träger fixiert wurde.

**Tabelle 1**

| **Analysenergebnisse** | | | | | | |
|---|---|---|---|---|---|---|
| Reaktionszeit [h] | Kat. | Kat. | Kat. | Kat. | Kat. | Kat. |
| | Bsp. 1 | Bsp. 2 | Bsp. 3 | Bsp. 4 | Bsp. 5 | Bsp. 6 |
| 1 | 3,3 | 5,6 | 6,5 | 5,5 | 4,3 | 0,0 |
| 2 | 4,9 | 7,2 | 7,4 | 6,6 | 5,8 | 0,0 |
| 4 | 6,6 | 8,3 | 8,5 | 8,0 | 7,5 | 0,0 |

Die Vergleichsbeispiele belegen eindeutig, dass der erfindungsgemäße Katalysator die erwünschten kurzen Verweilzeiten des Trichlorsilans am Katalysator einzustellen vermag. Kurze Verweilzeiten sind insbesondere bei einer kontinuierlichen Prozessführung erwünscht.

### Standfestigkeit des Katalysators:

Der gemäß Beispiel 3 hergestellte Katalysator wurde über mehrere Monate einem Dauerbetrieb unterzogen und seine Aktivität überprüft. Zudem wurde der Dauerbetrieb unterbrochen, das Katalysatorbett trockengelegt und erneut in Betrieb genommen. Die Bestimmung der Unsatzraten zeigte eine gleichbleibende Aktivität des Katalysators.

## Patentansprüche

1. Anlage zur Dismutierung von Wasserstoff und Halogen enthaltenden Siliziumverbindungen, umfassend
einen Katalysator, der ein Trägermaterial und mindestens ein lineares, cyclisches, verzweigtes und/oder vernetztes aminoalkylfunktionelles Siloxan und/oder Silanol umfasst, wobei mindestens ein Siloxan oder Silanol in idealisierter Form der allgemeinen Formel II entspricht,
(R²)[-O-(R⁴)Si(A)]ₐR³ · (HW)_{w} (II)
wobei A einem Aminoalkyl-Rest -(CH₂)₃-N(R¹)₂, R¹ gleich oder unterschiedlich ist und einer iso-Butyl-, n-Butyl-, tert.-Butyl- und/oder einer Cyclohexyl-Gruppe, R² unabhängig voneinander Wasserstoff, einer Methyl-, Ethyl-, n-Propyl-, iso-Propyl-Gruppe und/oder Y sowie R³ und R⁴ unabhängig voneinander einer Hydroxy-, Methoxy-, Ethoxy-, n-Propoxy-, iso-Propoxy-, Methyl-, Ethyl, n-Propyl-, iso-Propyl-Gruppe und/oder -OY entsprechen, wobei Y für das Trägermaterial steht, HW eine Säure darstellt, wobei W einem anorganischen oder organischen Säure-Rest entspricht, mit a ≥ 1 für ein Silanol, a ≥ 2 für ein Siloxan und w ≥ 0, mit mindestens
einer Destillationskolonne (1) mit einer Kolonnenvorlage (1.1) und einem Kolonnenkopf (1.2), mindestens einem Seitenreaktor (2) mit Katalysatorbett (3), mindestens einer Eduktaufgabe (1.3), einer Produktentnahme (1.4) und mindestens einer weiteren Produktentnahme (1.5 bzw. 1.8), wobei die Destillationskolonne (1) mit mindestens einem Kaminboden (4) ausgestattet ist und mindestens ein Seitenreaktor (2) über mindestens drei Rohrleitungen (5, 6, 7) mit der Destillationskolonne (1) derart verbunden ist, dass der Übergang der Leitung (5) in die Destillationskolonne (1) für den Ablauf des Kondensates vom Kaminboden (4) höher liegt, als die Oberkante des Katalysatorbetts (3), die Leitung (6) für die Abführung der Flüssigphase aus dem Seitenreaktor (2) unterhalb des Kaminbodens (4) in die Destillationskolonne (1) einmündet und diese Einmündung (6) tiefer liegt als die Oberkante des Katalysatorbetts (3) sowie die Leitung (7) für die Abführung der Gasphase aus dem dazugehörigen Seitenreaktor (2) oberhalb der Ebene des Kaminbodens (4) in die Destillationskolonne (1) mündet, wobei die Kolonnenvorlage beheizbar und die Kolonne kühlbar ist.

2. Anlage nach Anspruch 1,
**dadurch gekennzeichnet,**
**dass** der Katalysator hergestellt wird, indem
ein Trägermaterial und mindestens ein Alkoxysilan der allgemeinen Formel I,
R²-O-(R⁴)Si(A)-R³ (I),
wobei A einem Aminoalkyl-Rest -(CH₂)₃-N(R¹)₂ entspricht und R¹ gleich oder unterschiedlich ist und einer iso-Butyl-, n-Butyl-, tert.-Butyl- und/oder einer Cyclohexyl-Gruppe, R² Wasserstoff, einer Methyl-, Ethyl-, n-Propyl-oder iso-Propyl-Gruppe sowie R³ und R⁴ unabhängig voneinander einer Hydroxy-, Methoxy-, Ethoxy-, n-Propoxy-, iso-Propoxy-, Methyl-, Ethyl, n-Propyl- und/oder iso-Propyl-Gruppe entsprechen,
- in Gegenwart von Wasser und/oder eines Lösemittels sowie gegebenenfalls unter Zusatz einer Säure hydrolysiert und gegebenenfalls kondensiert werden, und der bereits vorhandene oder bei der Umsetzung entstehende Alkohol entfernt wird, wobei 0,5 bis 50 mol Wasser, bezogen auf die Alkoxysilylgruppen, bei der Hydrolyse zugegen sind.

3. Anlage nach Anspruch 2,
**dadurch gekennzeichnet, dass**
in dem Alkoxysilan der allgemeinen Formel I R¹ einer iso-Butyl-, n-Butyl- oder tert.-Butyl-Gruppe, R² einer Methyl-, Ethyl-, n-Propyl- oder iso-Propyl-Gruppe sowie R⁴ und R³ einer Methoxy-, Ethoxy-, n-Propoxy- und/oder iso-Propoxy-Gruppe entsprechen.

4. Anlage nach Anspruch 2 oder 3,
**dadurch gekennzeichnet, dass**
das Alkoxysilan 3-(N,N-Di-n-Butylamino)propyltrimethoxysilan, 3-(N,N-Di-n-Butylamino)propyltriethoxysilan, 3-(N,N-Di-tert-Butylamino)propyltrimethoxysilan, 3-(N,N-Di-tert-Butylamino)propyltriethoxysilan, 3-(N,N-Di-iso-Butylamino)-propyltrimethoxysilan oder 3-(N,N-Di-iso-Butylamino)propyltriethoxysilan entspricht.

5. Anlage nach einem der Ansprüche 2 bis 4,
**dadurch gekennzeichnet, dass**
die Umsetzung zwischen 0 und 150 °C durchgeführt wird.

6. Anlage nach einem der Ansprüche 2 bis 5,
**dadurch gekennzeichnet, dass**
der Katalysator bis zur Gewichtskonstanz getrocknet wird.

7. Anlage nach einem der Ansprüche 1 bis 6,
**dadurch gekennzeichnet, dass**
das Trägermaterial SiO₂-Partikel oder SiO₂-Formkörper aufweist.

8. Anlage nach einem der Ansprüche 1 bis 7,
**dadurch gekennzeichnet, dass**
dem Reaktor mindestens eine Kolonne zugeordnet ist.

9. Anlage nach einem der Ansprüche 1 bis 8,
**dadurch gekennzeichnet, dass**
der Katalysator jedem Trennboden der Kolonne zugeordnet ist.

10. Verwendung einer Anlage nach mindestens einem der Ansprüche 1 bis 9 zur Dismutierung von Wasserstoff und Halogen enthaltenden Siliziumverbindungen.

11. Verwendung einer Anlage nach Anspruch 10 zur Dismutierung von Wasserstoff enthaltenden Chlorsilanen.
